# EUROPÄISCHE PATENTANMELDUNG

(11) **EP 0 838 313 A1**
(43) Veröffentlichungstag der Anmeldung: **29.04.1998**
(21) Anmeldenummer: 97117356.2
(22) Anmeldetag: 08.10.1997
(51) Int. Cl.: B26D 5/06, B26D 7/26

(54) **Verfahren und Vorrichtung zum Einrichten von paarweise zusammenwirkenden Werkzeugen**

(30) Priorität: 19.10.1996 DE 19643261
(71) Anmelder: TOPACK Verpackungstechnik GmbH, 21493 Schwarzenbek (DE)
(72) Erfinder: Ditzel, Heinz, 61137 Schöneck (DE)
(74) Vertreter: Hiss, Ludwig, Pat. Ass. Dipl.-Ing.

(57) **Zusammenfassung**

Die Erfindung betrifft das Einrichten von paarweise zusammenwirkenden Werkzeugen.

Es ist das Ziel, die Einstellung des gegenseitigen Abstandes zwischen den auf Werkzeugträgern angeordneten Werkzeugen zu optimieren.
Erreicht wird dies durch Überwachungs- und Steuermittel (26) sowie Stellantriebsmittel (16, 17), welche einen Werkzeugträger (4) bis zur Kontaktierung eines Werkzeuges (3) mit einem Gegenwerkzeug (6) vorbewegen und anschließend bis zu einem definierten Abstand zwischen den Werkzeugen zurückbewegen.
Damit kann auf sichere, wiederholbare Weise ein minimaler Funktionsabstand zwischen den Werkzeugen erzielt und deren Arbeitsweise und Standzeit optimiert werden.

## Beschreibung

Die Erfindung betrifft ein Verfahren zum Einrichten von auf separaten Werkzeugträgern angeordneten, jeweils paarweise zusammenwirkenden Werkzeugen.

Die Erfindung betrifft außerdem eine Vorrichtung zum Einrichten von auf separaten Werkzeugträgern angeordneten, jeweils paarweise zusammenwirkenden Werkzeugen.

Unter Werkzeugen der eingangs genannten Art sind beispielsweise Stanzwerkzeuge und dergleichen zu verstehen, deren Werkzeugträger in Form einer geradlinigen oder bogenförmigen Hin- und Herbewegung relativ zueinander bewegt werden.
Desgleichen sind rotative Werkzeugträger gemeint, wie zum Beispiel mit Schneid-, Schlitz-, Perforier- oder Rillwerkzeugen bestückte Wellen.
Bei allen derartigen paarweise, d. h. mit entsprechenden Amboß- bzw. Gegenwerkzeugen zusammenwirkenden Werkzeugen ist man bemüht, sie mit einem möglichst geringen gegenseitigen Abstand zueinander einzustellen, was zum Beispiel bei jedem Werkzeugwechsel erforderlich ist, wodurch einerseits der Verschleiß minimiert sowie andererseits ein gleichbleibend gutes Arbeitsergebnis erreicht werden soll.

Der Erfindung liegt die Aufgabe zugrunde, die Werkzeugeinstellung zu optimieren.

Diese Aufgabe wird erfindungsgemäß dadurch gelöst, daß die Werkzeuge durch Verstellen wenigstens eines Werkzeugträgers miteinander in Kontakt gebracht werden und daß durch Zurückstellen des Werkzeugträgers die Werkzeuge auf einen definierten gegenseitigen Abstand eingestellt werden.
Eine sich besonders für eine automatisierbare Verfahrensweise eignende Weiterbildung
besteht darin, daß die Verstellung und Rückstellung des Werkzeugträgers schrittweise erfolgt. Bei dieser Verfahrensweise bietet sich insbesondere eine Ausgestaltung an, gemäß der durch eine wiederholte Folge von Stellschritten der Kontakt zwischen den Werkzeugen hergestellt wird. Eine diese Verfahrensweise optimierende, besonders effektive Weiterbildung besteht darin, daß die Verstellung und Rückstellung des Werkzeugträgers in Einzelschritten mit definierter Schrittweite und eine Wiederholung des Vorgangs in Einzelschritten mit kleinerer Schrittweite erfolgt.

Eine auf eine in der Praxis häufig vorkommende Anordnung zugeschnittene Weiterbildung des Verfahrens besteht darin, daß bei jeweils mehreren auf den Werkzeugträgern angeordneten Werkzeugen eine wechselseitige Einstellung an entgegengesetzten Enden eines Werkzeugträgers erfolgt. Zur Optimierung einer derartigen Verfahrensweise wird außerdem vorgeschlagen, daß bei durch Einstellung an einem Ende des Werkzeugträgers nach einer Verstellung erzieltem oder nicht erzieltem bzw. nach einer Rückstellung unterbrochenem Kontakt eine entsprechende Einstellung am anderen Ende des Werkzeugträgers vorgenommen wird, derart, daß bei einem nach der Verstellung ausbleibendem Kontakt die Einstellung vom ersten Ende her wiederholt wird, und bei erzieltem Kontakt eine Rückstellung des zweiten Endes des Werkzeugträgers erfolgt. Zweckmäßigerweise wird die abwechselnde bzw. aufeinanderfolgende Einstellung an beiden Enden des Werkzeugträgers durch eine Folge von kleineren Einzelschritten wiederholt.

Die Vorrichtung zur Durchführung des eingangs bezeichneten Verfahrens besteht darin, daß wenigstens einer der Werkzeugträger mit Stellantriebsmitteln zum Anstellen bzw. Rückstellen relativ zum anderen Werkzeugträger sowie mit Überwachungs- und Steuermitteln zum Registrieren des Werkzeugkontaktes und zum Auslösen einer Rückstellbewegung versehen ist. Eine sich besonders für eine automatisierte Einrichtung eignende, sensibel betreibbare Ausgestaltung besteht darin, daß die Überwachungs- und Steuermittel die Stellantriebsmittel des Werkzeugträgers schrittweise aktivierend ausgebildet sind. Nach einem zusätzlichen Vorschlag sind die Überwachungs- und Steuermittel eine wiederholte Folge von Stellschritten zur Kontaktierung der Werkzeuge auslösend ausgebildet. Eine diese Anordnung optimierende Ausgestaltung besteht darin, daß die Überwachungs- und Steuermittel eine Folge von Einzelschritten definierter Schrittweite und eine Wiederholung von Einzelschritten kleinerer Schrittweite auslösend ausgebildet sind. In der Praxis werden häufig an ein und dem selben Objekt mehrere Arbeitsvorgänge parallel bzw. gleichzeitig vorgenommen. Für diese Arbeitsweise sieht eine Weiterbildung vor, daß bei jeweils mehreren auf den Werkzeugträgern angeordneten Werkzeugen zwei an entgegengesetzten Enden eines Werkzeugträgers angreifende, wechselseitig aktivierbare Stellantriebsmittel vorgesehen sind.

Um auf einfache und sichere Weise eine gegenseitige Kontaktierung der Werkzeuge zu überwachen, ist vorgesehen, daß bei als die Werkzeuge tragende Wellen ausgebildeten Werkzeugträgern die Wellen elektrisch gegeneinander isolierte Lagerstellen aufweisen, was bevorzugt dadurch erreicht wird, daß die Lagerstellen mit keramisch beschichteten Lagerzapfen versehen sind.
Als Stellantriebsmittel sind unterschiedliche Ausführungen unter Verwendung eines Stellmotors in Verbindung mit einer Stellspindel denkbar. In Verbindung mit als Wellen ausgebildeten Werkzeugträgern wird eine vorteilhafte Ausgestaltung vorgeschlagen, gemäß der die Stellantriebsmittel einen Stellmotor aufweisen, der mit einer Stellspindel versehen ist, welche in einen verschiebbaren Stellkeil eingreift, dessen Keilfläche einen unter Vorspannung stehenden Lagerblock des Werkzeugträgers beaufschlagt.

Der mit der Erfindung erzielte Vorteil besteht darin, daß auf einfache, sichere und wiederholbare Weise ein definierter minimaler Abstand zwischen den zusammenwirkenden Werkzeugen eingestellt werden kann, so daß eine längere Standzeit sowie auch nach einem Werkzeugwechsel eine gleichbleibend optimale Arbeitsweise der Werkzeuge gewährleistet ist.

Die Erfindung wird nachstehend anhand eines in der Zeichnung dargestellten Ausführungsbeispiels näher erläutert.

Hierbei zeigen:
- Figur 1: eine Vorrichtung zum Einrichten von zwei als Messerwellen ausgebildeten Werkzeugträgern im Teilschnitt,
- Figur 2: einen Teilschnitt durch ein Stellantriebsmittel für einen Werkzeugträger im Teilschnitt und
- Figur 3: ein den Verfahrensablauf darstellendes Flußdiagramm zum Einrichten eines Werkzeugträgers.

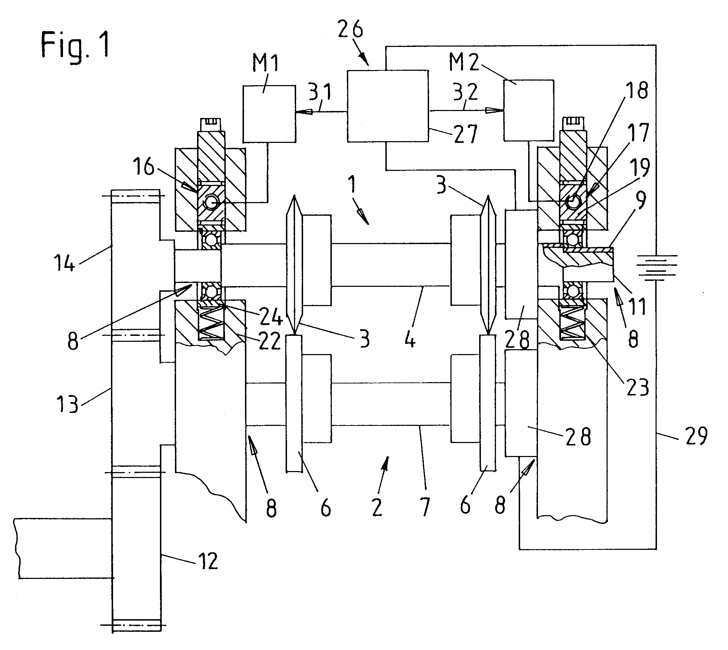

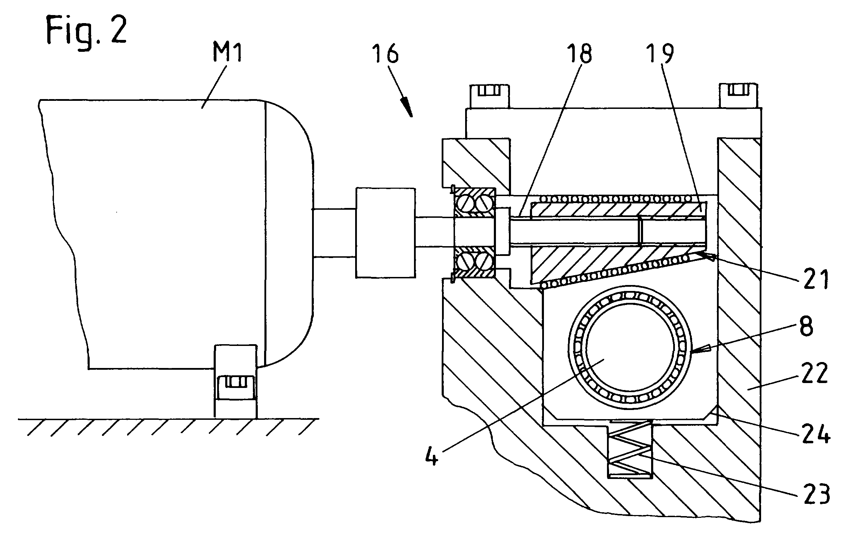

Das in Figur 1 dargestellte Bearbeitungsaggregat kann beispielsweise zur Bearbeitung von Packungszuschnitten in Form von sogenannten Blanketts für Zigarettenpackungen eingesetzt werden. Es besteht zu diesem Zweck aus zwei Werkzeugträgern 1 und 2 in Form einer mit Kreismessern 3 besetzten Messerwelle 4 und einer mit rotationssymmetrischen, mit den Kreismessern 3 zusammenwirkenden Amboßwerkzeugen 6 bestückten Amboßwelle 7. Beide Wellen 4 und 7 sind mit elektrisch gegeneinander isolierten Lagerstellen 8 in Form von eine keramische Beschichtung 9 aufweisenden Lagerzapfen 11 versehen.
Der Antrieb der Wellen 4, 7 erfolgt durch ein Antriebsrad 12 und mit diesem bzw. miteinander kämmenden Ritzeln 13, 14.
Die Messerwelle 4 ist beidseitig mit identischen Stellantriebsmitteln 16 bzw. 17 versehen, von denen eines 16 in Figur 2 im Längsschnitt dargestellt ist.
Die Stellantriebsmittel 16 bzw. 17 weisen jeweils einen Stellmotor M1 bzw. M2 auf, der mit einer Stellspindel 18 versehen ist, die in einen längsverschiebbar gelagerten Stellkeil 19 eingreift, dessen Keilfläche 21 einen auf der Gegenseite unter der Wirkung einer sich im Lagergehäuse 22 abstützenden Druckfeder 23 stehenden Lagerblock 24 der Messerwelle 4 beaufschlagt.
Zum Einrichten bzw. Anstellen der Messerwelle 4 relativ zur Amboßwelle 7 sind außerdem Überwachungs- und Steuermittel 26 vorgesehen, die eine Regeleinheit 27 umfassen, welche überwachungsseitig in einen über Schleifringe 28 der beiden Wellen 4, 7 geführten und durch Kontakt der Werkzeuge 3, 6 schließbaren Stromkreis 29 integriert ist sowie ausgangsseitig über Steuerleitungen 31, 32 mit den Stellmotoren M1, M2 verknüpft ist.

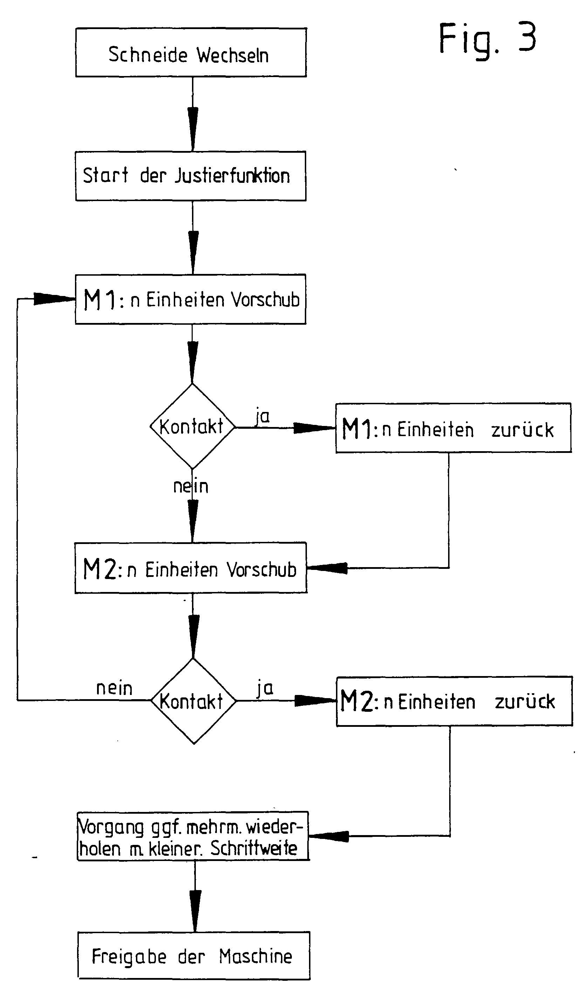

Für die in Figur 1 dargestellte Anordnung wird nachfolgend anhand des in Figur 3 dargestellten Flußdiagramms der Verfahrensablauf zur Messereinstellung nach einem Wechsel der Kreismesser 3 beschrieben, was in Figur 3 durch die Funktionskästen 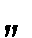 Schneide wechseln" und 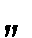 Start der Justierfunktion" angedeutet ist.

Mit dem Start der Justierfunktion wird zunächst der Stellmotor M1 zwecks einseitiger Anstellung der Messerwelle 4 zur Ausführung von n Vorschubeinheiten aktiviert. Wird dabei bereits der Stromkreis 29 durch Kontakt von Kreismesser 3 und Amboßwerkzeug 6 geschlossen und durch die Überwachungs- und Steuermittel 26 bestätigt, so wird der Stellmotor M1 zur Ausführung von n Rückstelleinheiten über die Steuerleitung 31 aktiviert und das Kreismesser 3 auf einen definierten Funktionsabstand relativ zum Amboßwerkzeug 6 zurückbewegt, der im hundertstel Millimeterbereich liegt.
Anschließend wird der Stellmotor M2 zwecks Anstellung der anderen Seite der Messerwelle 4 zur Ausführung von n Vorschubeinheiten aktiviert. Dieser zweite Stellmotor M2 wird vorrangig vor der Rückstellung von M1 auch dann aktiviert, wenn die Überwachungs- und Steuermittel 26 nach Ausführung der Vorschubeinheiten von M1 einen Kontakt der betreffenden Werkzeuge 3, 6 verneinen.

Wird durch den Vorschub von M2 ein Kontakt an der anderen Messerwellenseite verneint, so wird der gesamte vorstehend beschriebene Vorgang ausgehend von M1 wiederholt.
Wird hingegen durch den Vorschub von M2 ein Kontakt erreicht und bestätigt, so wird M2 sogleich zur Ausführung von n Rückstelleinheiten aktiviert und auf der Gegenseite der Messerwelle 4 ebenfalls ein definierter Funktionsabstand zwischen den Werkzeugen 3, 6 hergestellt.

Gegebenenfalls können die einzelnen Vorgänge des beschriebenen Verfahrensablaufs zwecks Minimierung des Werkzeugabstandes mit kleinerer Schrittweite der Stell- bzw. Rückstelleinheiten ein oder mehrmals wiederholt werden.
Nach der beschriebenen Messerwelleneinstellung erfolgt die Produktionsfreigabe der zugeordneten bzw. das Bearbeitungsaggregat aufweisenden Maschine.

## Patentansprüche

1. Verfahren zum Einrichten von auf separaten Werkzeugträgern angeordneten, jeweils paarweise zusammenwirkenden Werkzeugen, dadurch gekennzeichnet, daß die Werkzeuge durch Verstellen wenigstens eines Werkzeugträgers miteinander in Kontakt gebracht werden, und daß durch Zurückstellen des Werkzeugträgers die Werkzeuge auf einen definierten gegenseitigen Abstand eingestellt werden.

2. Verfahren nach Anspruch 1, dadurch gekennzeichnet, daß die Verstellung und Rückstellung des Werkzeugträgers schrittweise erfolgt.

3. Verfahren nach Anspruch 1 oder 2, dadurch gekennzeichnet, daß durch eine wiederholte Folge von Stellschritten der Kontakt zwischen den Werkzeugen hergestellt wird.

4. Verfahren nach einem der Ansprüche 1 bis 3, dadurch gekennzeichnet, daß die Verstellung und Rückstellung des Werkzeugträgers in Einzelschritten mit definierter Schrittweite und eine Wiederholung des Vorgangs in Einzelschritten mit kleinerer Schrittweite erfolgt.

5. Verfahren nach einem der Ansprüche 1 bis 4, dadurch gekennzeichnet, daß bei jeweils mehreren auf den Werkzeugträgern angeordneten Werkzeugen eine wechselseitige Einstellung an entgegengesetzten Enden eines Werkzeugträgers erfolgt.

6. Verfahren nach einem der Ansprüche 1 bis 5, dadurch gekennzeichnet, daß bei durch Einstellung an einem Ende des Werkzeugträgers nach einer Verstellung erzieltem oder nicht erzieltem bzw. nach einer Rückstellung unterbrochenem Kontakt eine entsprechende Einstellung am anderen Ende des Werkzeugträgers vorgenommen wird, derart, daß bei einem nach der Verstellung ausbleibendem Kontakt die Einstellung vom ersten Ende her wiederholt wird und bei erzieltem Kontakt eine Rückstellung des zweiten Endes des Werkzeugträgers erfolgt.

7. Verfahren nach einem der Ansprüche 1 bis 6, dadurch gekennzeichnet, daß die abwechselnde bzw. aufeinanderfolgende Einstellung an beiden Enden des Werkzeugträgers durch eine Folge von kleineren Einzelschritten wiederholt wird.

8. Vorrichtung zum Einrichten von auf separaten Werkzeugträgern angeordneten, jeweils paarweise zusammenwirkenden Werkzeugen, dadurch gekennzeichnet, daß wenigstens einer der Werkzeugträger (4) mit Stellantriebsmitteln (16) zum Anstellen bzw. Rückstellen relativ zum anderen Werkzeugträger (7) sowie mit Überwachungs- und Steuermitteln (26) zum Registrieren des Werkzeugkontaktes und zum Auslösen einer Rückstellbewegung versehen ist.

9. Vorrichtung nach Anspruch 8, dadurch gekennzeichnet, daß die Überwachungs- und Steuermittel (26) die Stellantriebsmittel (16) des Werkzeugträgers (4) schrittweise aktivierend ausgebildet sind.

10. Vorrichtung nach Anspruch 8 oder 9, dadurch gekennzeichnet, daß die Überwachungs- und Steuermittel (26) eine wiederholte Folge von Stellschritten zur Kontaktierung der Werkzeuge (3, 6) auslösend ausgebildet sind.

11. Vorrichtung nach einem der Ansprüche 8 bis 10, dadurch gekennzeichnet, daß die Überwachungs- und Steuermittel (26) eine Folge von Einzelschritten definierter Schrittweite und eine Wiederholung von Einzelschritten kleinerer Schrittweite auslösend ausgebildet sind.

12. Vorrichtung nach einem der Ansprüche 8 bis 11, dadruch gekennzeichnet, daß bei jeweils mehreren auf den Werkzeugträgern (4; 7) angeordneten Werkzeugen (3; 6) zwei an entgegengesetzten Enden eines Werkzeugträgers (4) angreifende, wechselseitig aktivierbare Stellantriebsmittel (16; 17) vorgesehen sind.

13. Vorrichtung nach einem der Ansprüche 8 bis 12, dadurch gekennzeichnet, daß bei als die Werkzeuge (3) tragende Wellen ausgebildeten Werkzeugträgern (4) die Wellen elektrisch gegeneinander isolierte Lagerstellen (8) aufweisen.

14. Vorrichtung nach Anspruch 13, dadurch gekennzeichnet, daß die Lagerstellen (8) mit keramisch beschichteten Lagerzapfen (11) versehen sind.

15. Vorrichtung nach einem der Ansprüche 8 bis 14, dadurch gekennzeichnet, daß die Stellantriebsmittel (16, 17) einen Stellmotor (M1 bzw. M2) aufweisen, der mit einer Stellspindel (18) versehen ist, welche in einen verschiebbaren Stellkeil (19) eingreift, dessen Keilfläche (21) einen unter Vorspannung stehenden Lagerblock (24) des Werkzeugträgers (4) beaufschlagt.
